Europäisches Patentamt

(19) European Patent Office

Office européen des brevets

(11) Numéro de publication : **0 241 320 B1**

(12) # FASCICULE DE BREVET EUROPEEN

(45) Date de publication du fascicule du brevet :
**05.06.91 Bulletin 91/23**

(51) Int. Cl.$^5$ : **H02K 3/20, H02K 19/26**

(21) Numéro de dépôt : **87400438.5**

(22) Date de dépôt : **27.02.87**

(54) **Alternateur à faible taux d'harmoniques.**

(30) Priorité : **07.03.86 FR 8603235**

(43) Date de publication de la demande :
**14.10.87 Bulletin 87/42**

(45) Mention de la délivrance du brevet :
**05.06.91 Bulletin 91/23**

(84) Etats contractants désignés :
**DE ES GB IT**

(56) Documents cités :
**FR-A- 364 374**
**FR-A- 1 513 615**
**GB-A- 2 114 819**
**US-A- 4 573 003**

(73) Titulaire : **SOCIETE LEROY SOMER**
**Boulevard Marcellin Leroy**
**F-16015 Angoulème (FR)**

(72) Inventeur : **Renard, Michel**
**CIDEX 482 rue de Belfond**
**F-16730 Fleac (FR)**

(74) Mandataire : **Bouju, André**
**Cabinet André Bouju B.P. 6250**
**F-75818 Paris Cédex 17 (FR)**

## Description

La présente invention concerne un alternateur à faible taux d'harmoniques.

Elle vise particulièrement, un alternateur monophasé dont l'inducteur comporte une paire de pôles et non pas un alternateur polyphasé du genre de celui décrit dans l'US-A-4573003.

Comme l'on sait, le champ de réaction d'induit qui prend naissance dans l'induit d'un alternateur en conséquence du courant qui y circule présente, par rapport à l'inducteur, une composante directe et une composante inverse, la composante inverse ayant une fréquence double de celle du courant circulant dans l'induit.

La saturation des cornes polaires due à la composante directe du champ de réaction d'induit provoque une déformation de la répartition du flux magnétique dans l'entrefer. Ceci contribue à induire dans les enroulements de l'induit une force électromotrice contenant une forte proportion d'harmonique d'ordre 3.

De plus, dans les alternateurs monophasés, la composante inverse du champ de réaction d'induit induit dans les enroulements de l'inducteur une force électromotrice et un courant de fréquence double de celle du courant circulant dans l'induit. Ceci génère un champ dit "réfléchi" qui provoque, dans le circuit magnétique de l'inducteur, des pertes fer supplémentaires qui augmentent l'échauffement en service de l'alternateur. Ce champ réfléchi induit en outre, au stator, une force électromotrice de fréquence triple de celle du courant circulant dans l'induit, ce qui accroît encore le taux d'harmonique d'ordre 3. Or, cette harmonique d'ordre 3 est particulièrement préjudiciable au bon fonctionnement de certains types d'appareils alimentés.

Afin de réduire la proportion d'harmonique d'ordre 3 dans la force électromotrice de l'induit, certains constructeurs proposent de bobiner l'induit de l'alternateur avec un enroulement spécial à pas raccourci. Toutefois, cette solution est coûteuse et conduit à la fabrication de machines dites spéciales qui doivent être en outre le plus souvent déclassées.

Le but de l'invention est ainsi de proposer un alternateur monophasé dont la tension de sortie présente un taux d'harmonique d'ordre 3 aussi réduit que possible, indépendamment de la nature du bobinage de l'induit.

Selon l'invention, l'alternateur monophasé qui comporte un induit muni d'au moins un enroulement d'induit et un inducteur qui comprend d'une part un circuit magnétique présentant au moins une paire de pôles portant latéralement des cornes polaires et d'autre part au moins un enroulement d'excitation formé autour du circuit magnétique, l'inducteur et l'induit étant mobiles en rotation l'un par rapport à l'autre, est caractérisé en ce que l'un au moins des pôles présente au voisinage de l'une au moins de ses cornes polaires une encoche occupée par un enroulement correcteur qui embrasse ladite corne polaire et dont les extrémités sont raccordées aux bornes d'une diode de façon que l'enroulement correcteur soit parcouru en service par un courant sensiblement continu.

Le courant sensiblement continu qui parcourt l'enroulement correcteur donne naissance à un champ magnétique modifiant la saturation des cornes polaires qui sont entourées par cet enroulement correcteur. Cette modification de l'état de saturation des cornes polaires influe sur les champs générés dans l'induit qui se referment dans les cornes polaires. Ceci se traduit par des modifications des flux magnétiques dans l'induit, dans un sens réduisant la proportion d'harmonique d'ordre 3.

L'enroulement correcteur participe également à la réduction des pertes fer dans le circuit magnétique de l'inducteur car il permet d'affaiblir le champ inverse. Il a de plus été constaté que les courbes de l'intensité du courant de sortie en fonction de l'intensité du courant d'excitation à cos $\varphi = 0,8$ et cos $\varphi = 1$ sont plus proches l'une de l'autre avec un alternateur muni d'au moins un enroulement correcteur selon l'invention. Ceci est favorable aux processus de régulation.

Suivant un mode de réalisation avantageux de l'invention, qui concerne un alternateur monophasé, les extrémités de l'enroulement correcteur sont raccordées aux bornes d'une diode.

La composante inverse, lors de son passage par l'inducteur, induit aux bornes de l'enroulement correcteur une force électromotrice donnant naissance dans cet enroulement correcteur à un courant qui est redressé par la diode. Ce courant qui est assimilable à un courant continu induit un champ magnétique continu qui tend à modifier l'état de saturation de la ou des corne(s) polaire(s) entourée(s) par ledit enroulement. Ainsi, dans le cas d'un alternateur monophasé, on exploite l'existence de la composante inverse dans l'inducteur pour générer spontanément le courant dont on a besoin dans l'enroulement correcteur.

De préférence, l'axe de l'enroulement correcteur est sensiblement perpendiculaire à l'axe des pôles.

L'enroulement correcteur recueille ainsi de façon optimale l'effet d'induction du champ inverse.

D'autres particularités de l'invention résulteront encore de la description qui va suivre.

Aux dessins annexés, donnés à titre d'exemples non limitatifs :

   – la figure 1 est une vue en coupe schématique d'un alternateur monophasé bipolaire conforme à l'invention,

   – la figure 2 est un schéma de principe du circuit électrique de l'inducteur de la figure 1, et

   – la figure 3 est un schéma analogue au précédent mais concernant une variante de réalisation.

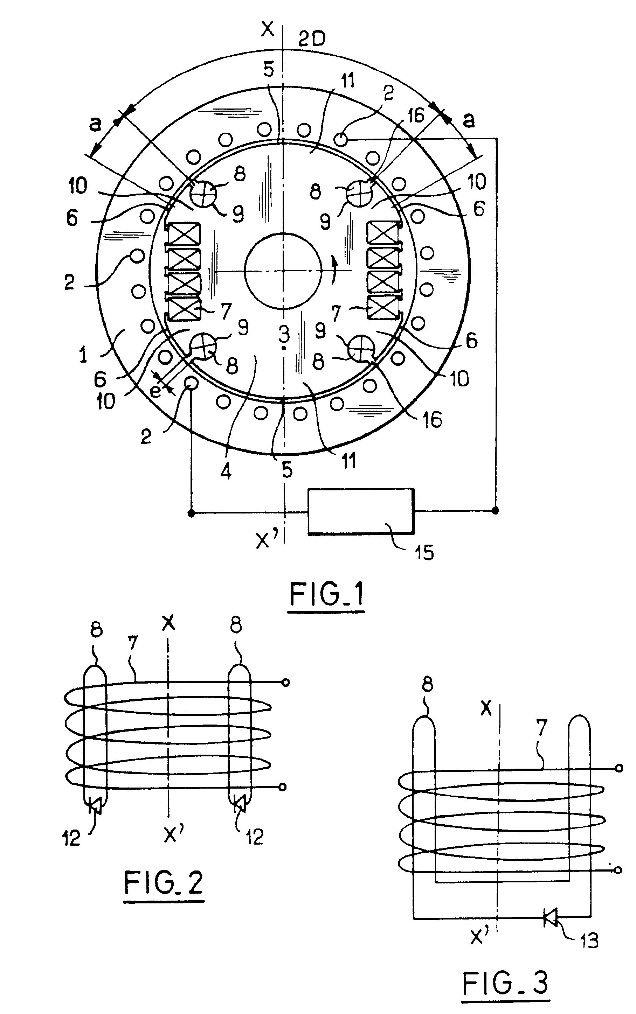

A la figure 1, on a représenté un alternateur monophasé comportant un induit 1 muni d'un enroulement 2 d'induit raccordé aux bornes d'une charge 15 et un inducteur 3 qui comprend un circuit magnétique 4 présentant une paire de pôles 5 dont chacun porte latéralement deux cornes polaires opposées 6. Quatre enroulements d'excitation 7 sont formés autour du circuit magnétique 4 entre les deux pôles 5, selon un axe sensiblement parallèle à l'axe X-X' des pôles 5. L'inducteur 3 et l'induit 1 sont mobiles en rotation l'un par rapport à l'autre, tandis que, le plus souvent, l'inducteur 3 est le rotor, et l'induit 1 est fixe.

Les éléments précités sont réalisés et montés de manière classique.

Suivant l'invention, l'inducteur 3 comprend en outre deux enroulements correcteurs 8 disposés de part et d'autre de l'axe X-X' des pôles 5 et dont chacun entoure le circuit magnétique 4 dans un plan parallèle à l'axe X-X' en passant dans une paire d'encoches 9 formées chacune dans un pôle différent 5 de manière à s'ouvrir dans la surface périphérique sensiblement cylindrique de ce pôle. Chaque encoche 9 détermine un col 10 entre l'une des cornes polaires 6 du pôle 5 correspondant et le reste du circuit magnétique 4. Chaque enroulement correcteur 8 embrasse les deux cols 10 adjacents aux deux encoches 9 qu'il occupe.

L'axe des enroulements correcteurs 8 est sensiblement perpendiculaire à l'axe X-X' des pôles 5.

Comme le montre la figure 2, les extrémités de chaque enroulement correcteur 8 sont raccordées aux bornes d'une diode 12.

Dans la variante de réalisation selon la figure 3, les deux enroulements correcteurs 8 sont montés en série aux bornes d'une diode 13.

Les isolations nécessaires sont prévues entre les enroulements d'excitation 7, les enroulements correcteurs 8 et le circuit magnétique 4.

Le fonctionnement du présent alternateur est le suivant :

Lorsque l'inducteur 3 est excité par alimentation de ses enroulements d'excitation 7 au moyen d'un courant continu d'intensité appropriée et que l'enroulement 2 de l'induit 1 est raccordé aux bornes de la charge 15, les ampères-tours de réaction d'induit donnent naissance à un champ magnétique qui présente une composante paire, dite champ inverse, de fréquence double de la fréquence nominale.

Une partie de ce champ inverse pénètre dans le circuit magnétique 4 de l'inducteur 3 par les cornes polaires 6 en traversant les enroulements correcteurs 8 et induit aux bornes de ces enroulements correcteurs 8 une force électromotrice qui donne naissance dans les enroulements correcteurs 8 à un courant qui est redressé par la diode 12, 13 raccordée aux bornes de ces enroulements 8. Ce courant redressé, assimilable à un courant continu, génère un champ magnétique continu d'autosaturation (c'est-à-dire ne nécessitant pas d'alimentation en courant auxiliaire) des cornes polaires 6 qui sont entourées par les enroulements correcteurs 8. Plus précisément, le champ généré par les enroulements correcteurs s'ajoute au champ principal produit par les enroulements inducteurs dans l'une des cornes de chaque pôle et se retranche du champ principal dans l'autre corne de chaque pôle. Cette modification de l'état de saturation des cornes polaires déforme les lignes de champ dans l'induit, et ceci dans un sens réduisant la proportion d'harmonique d'ordre 3 dans la tension produite par l'alternateur.

La demanderesse a conduit des essais comparatifs sur deux alternateurs monophasés bipolaires 6 kVA, 50 Hz, 3000 t/mn à $\cos \varphi = 1$, le premier sans enroulement correcteur et le second muni d'enroulements correcteurs conformément à la présente invention. Dans le premier cas, elle a relevé sur l'onde de tension délivrée en sortie un taux d'harmonique d'ordre 3 de l'ordre de 23% alors que dans le second cas, le taux mesuré n'était plus que de 9% dans des conditions identiques de fonctionnement.

La demanderesse a également constaté que les enroulements correcteurs 8 participaient à la réduction des pertes fer dans le circuit magnétique 4 de l'inducteur 3 et autorisaient de plus une meilleure régulation de la tension de sortie de l'alternateur en fonction de la charge.

Des essais complémentaires ont démontré qu'une correction optimale était obtenue avec :

– chaque pôle s'étendant sur un angle sensiblement égal à 120° et l'arc compris entre les milieux des deux encoches 9 d'un même pôle 5 ayant un angle sensiblement égal à 90° ;

– une section d'encoche maximale qui tienne compte cependant des harmoniques supplémentaires engendrées par la présence de ces encoches lors du fonctionnement à vide de l'alternateur. Cette section d'encoches peut être choisie par exemple de sorte que le taux d'harmonique individuelle à vide ne dépasse pas 2% ;

– une ouverture (e) d'encoche minimale déterminée en fonction du diamètre des fils constitutifs de l'enroulement correcteur et de la tenue mécanique du bec 16 formé par cette ouverture ;

– pour chaque pôle 5, une section de passage 2a du flux magnétique principal dans les cornes polaires 6 au moins égale à 20% de la section de passage 2D de ce flux principal délimitée entre les deux encoches 9 du pôle considéré 5.

Bien entendu, l'invention n'est pas limitée à l'exemple que l'on vient de décrire.

En particulier, les enroulements correcteurs peuvent entourer chacun un seul des cols tels que 10, c'est-à-dire que dans l'inducteur bipolaire représenté il y aurait quatre enroulements correcteurs, un autour de chaque corne, si toutes les cornes étaient équipées.

Dans un autre mode de réalisation, les enroulements correcteurs pourraient passer chacun dans deux encoches diamétralement opposées.

## Revendications

1. Alternateur monophasé comportant un induit (1) muni d'au moins un enroulement (2) d'induit et un inducteur (3) qui comprend d'une part un circuit magnétique (4) présentant au moins une paire de pôles (5) portant latéralement des cornes polaires (6) et d'autre part au moins un enroulement d'excitation (7) formé autour du circuit magnétique (4), l'inducteur (3) et l'induit (1) étant mobiles en rotation l'un par rapport à l'autre, caractérisé en ce que l'un au moins des pôles (5) présente au voisinage de l'une au moins de ses cornes polaires (6) une encoche (9) occupée par un enroulement correcteur (8) qui embrasse ladite corne polaire (6) et dont les extrémités sont raccordées aux bornes d'une diode (12) de façon que l'enroulement correcteur soit parcouru en service par un courant sensiblement continu.

2. Alternateur conforme à la revendication 1, caractérisé en ce que l'axe de l'enroulement correcteur (8) est sensiblement perpendiculaire à l'axe (X-X') des pôles.

3. Alternateur conforme à l'une des revendications 1 ou 2, caractérisé en ce qu'il comprend au moins deux enroulements correcteurs (8) montés en série aux bornes d'une diode (13).

4. Alternateur conforme à l'une des revendications 1 ou 2, caractérisé en ce qu'il comprend au moins deux enroulements correcteurs (8) dont chacun a ses extrémités raccordées aux bornes d'une diode respective (12).

5. Alternateur conforme à l'une des revendications 1 à 4, caractérisé en ce que la section de la ou des encoche(s) (9) est déterminée de sorte que le taux individuel d'harmonique de la tension de sortie délivrée à vide par l'alternateur ne dépasse pas sensiblement 2%.

6. Alternateur conforme à l'une des revendications 1 à 5, caractérisé en ce que l'enroulement correcteur (8) entoure le circuit magnétique (4) en passant dans deux encoches (9) formées dans deux pôles (5) différents.

7. Alternateur conforme à la revendication 6, caractérisé en ce que les deux encoches (9) précitées sont situées d'un même côté de l'axe des pôles (X-X').

8. Alternateur conforme à l'une des revendications 1 ou 2, caractérisé en ce que chaque pôle (5) s'étend sur un angle sensiblement à 120° et présente une encoche (9) au voisinage de chacune de ses deux cornes polaires (6), et en ce que l'arc compris entre les deux encoches (9) d'un même pôle (5) a un angle sensiblement égal à 90°.

9. Alternateur conforme à la revendication 8, caractérisé en ce que, pour chaque pôle (5), la section de passage (2a) de flux magnétique dans les cornes polaires (6) est au moins égale à 20% de la section de passage (2D) de flux délimitée entre les deux encoches (9) du pôle (5) considéré.

## Ansprüche

1. Einphasenwechselstromgenerator, mit einem mit wenigstens einer Ankerwicklung (2) versehenen Anker und einem Induktor (3), der einerseits einen magnetischen Kreis (4) mit wenigstens einem Paar von an den Seiten Polschuhe (6) tragenden Polen (5) und andererseits wenigstens eine um den magnetischen Kreis ausgebildete Erregerwicklung (7) aufweist, wobei der Induktor (3) und der Anker (1) relativ zueinander drehbar sind, dadurch gekennzeichnet, daß wenigstens einer der Pole (5) in der Nähe wenigstens eines seiner Polschuhe (6) eine Aussparung (9) aufweist, in der eine Korrekturwicklung (8) aufgenommen ist, die den Polschuh (6) umgibt und deren Enden mit den Anschlüssen einer Diode (12) verbunden sind, derart, daß die Korrekturwicklung im Betrieb von einem Strom, der im wesentlichen ein Gleichstrom ist, durchflossen wird.

2. Wechselstromgenerator gemäß Anspruch 1, dadurch gekennzeichnet, daß die Mittelachse der Korrekturwicklung (8) im wesentlichen senkrecht zur Mittelachse (X-X') der Pole orientiert ist.

3. Wechselstromgenerator gemäß einem der Ansprüche 1 oder 2, dadurch gekennzeichnet, daß er wenigstens zwei Korrekturwicklungen (8) aufweist, die in Reihe an den Anschlüssen einer Diode (13) geschaltet sind.

4. Wechselstromgenerator gemäß einem der Ansprüche 1 oder 2, dadurch gekennzeichnet, daß er wenigstens zwei Korrekturwicklungen(8) aufweist, die jeweils mit ihren Enden an den Anschlüssen einer entsprechenden Diode (12) angeschlossen sind.

5. Wechselstromgenerator gemäß einem der Ansprüche 1 bis 4, dadurch gekennzeichnet, daß der Querschnitt der Aussparung(en) (9) so festgelegt wird, daß der Einzelklirrfaktor der vom Wechselstromgenerator im Leerlauf abgegebenen Ausgangsspannung im wesentlichen 2% nicht übersteigt.

6. Wechselstromgenerator gemäß einem der Ansprüche 1 bis 5, dadurch gekennzeichnet, daß die Korrekturwicklung (8) den magnetischen Kreis (4) umgibt und dabei durch zwei in zwei verschiedenen Polen (5) ausgebildete Aussparungen (9) verläuft.

7. Wechselstromgenerator gemäß Anspruch 6, dadurch gekennzeichnet, daß die zwei genannten Aussparungen (9) auf derselben Seite der Mittelachse der Pole (X-X') angeordnet sind.

8. Wechselstromgenerator gemäß einem der Ansprüche 1 oder 2, dadurch gekennzeichnet, daß sich jeder Pol (5) über einen Winkel von im wesentlichen 120° erstreckt und in der Nähe jedes von seinen zwei Polschuhen (6) eine Aussparung (9) aufweist und daß der zwischen den zwei Aussparungen (9) desselben Pols (5) eingeschlossene Bogen einen Winkel von im wesentlichen 90° besitzt.

9. Wechselstromgenerator gemäß Anspruch 8, dadurch gekennzeichnet, daß für jeden Pol (5) der vom magnetischen Fluß durchlaufene Abschnitt (2a) in den Polschuhen (6) wenigstens 20% des vom Fluß durchlaufenen Abschnittes (2D), der zwischen den zwei Aussparungen (9) des betrachteten Pols (5) begrenzt ist, beträgt.

(9) in the vicinity of each of its two pole shoes (6), and in that the arc extending between the two slots (9) of one and the same pole (5) subtends an angle substantially equal to 90°.

9. An alternator according to claim 8, characterized in that in the case of each pole (5), the passage cross-section (2a) for the magnetic flux within the pole shoes (6) is at least equal to 20% of the flux passage cross-section (2D) delimited between the two slots (9) of the pole (5) considered.

## Claims

1. An alternator comprising an armature (1) provided with at least one armature winding (2) and an inductor (3) comprising on the one hand a magnetic circuit (4) having at least one pair of poles (5) comprising lateral pole shoes (6) and on the other hand at least one excitation winding (7) formed around said magnetic circuit (4), the inductor (3) and the armature (1) being movable in rotation with respect to each other, characterized in that at least one of the poles (5) is provided in the vicinity of at least one of its pole shoes (6) with a slot (9) accomodating a corrector winding (8) which embraces said pole shoe (6) and the ends of which are connected to the terminals of a diode (12), whereby, in operation, a substantially direct current flows through said corrector winding.

2. An alternator according to claim 1, characterized in that the axis of the corrector winding (8) is substantially perpendicular to the axis (X-X') of the poles.

3. An alternator according to claim 1 or 2, characterized in that said alternator comprises at least two corrector windings (8) mounted in series at the terminals of a diode (13).

4. An alternator according to claim 1 or 2, characterized in that said alternator comprises at least two corrector windings (8), the ends of each corrector winding being connected to the terminals of a respective diode (12).

5. An alternator according to anyone of claims 1-4, characterized in that the cross-section of the slot or slots (9) is so determined that the individual harmonic content of the output voltage delivered by the alternator on no load does not exceed substantially 2%.

6. An alternator according to anyone of claims 1-5, characterized in that the corrector winding (8) surrounds the magnetic circuit (4) and passes within two slots (9) formed in two different poles (5).

7. An alternator according to claim 6, characterized in that said two slots (9) are located on the same side of the axis of the poles (X-X').

8. An alternator according to claim 1 or 2, characterized in that each pole (5) extends through an angle substantially equal to 120° and is provided with a slot

**FIG_1**

**FIG_2**

**FIG_3**